# FASCICULE DE BREVET EUROPEEN

(11) **EP 0 720 899 B1**
(45) Date de publication et mention de la délivrance du brevet: **22.09.1999**
(21) Numéro de dépôt: 96400024.4
(22) Date de dépôt: 05.01.1996
(51) Int. Cl.: B29C 35/10

(54) **Dispositif de réticulation par rayonnement UV**
Gerät zum Vernetzen mittels UV Strahlung
Cross-linking device using UV radiation

(30) Priorité: 06.01.1995 FR 9500116
(43) Date de publication de la demande: 10.07.1996
(73) Titulaire: ALCATEL, 75008 Paris (FR)
(72) Inventeur: Bourghelle, Patrick, F-93200 Saint-Denis (FR); Mc Nutt, Christopher, F-78100 Saint Germain en Laye (FR)
(74) Mandataire: Buffière, Michelle

(56) Documents cités:
- FR-A- 2 629 187
- US-A- 4 636 405
- US-A- 5 171 609
- US-A- 5 334 421
- PATENT ABSTRACTS OF JAPAN vol. 013 no. 101 (C-574) ,9 Mars 1989 & JP-A-63 277539 (FURUKAWA ELECTRIC CO LTD:THE) 15 Novembre 1988,

## Description

L'invention concerne un dispositif de réticulation par rayonnement UV d'un objet au moins partiellement constitué par un matériau réticulable.

En particulier l'invention concerne un dispositif de réticulation par rayonnement UV, sous atmosphère exempte d'oxygène, d'objets tels que des fibres optiques enrobées d'encre de coloration réticulable par rayonnement UV, ou des rubans de fibres optiques enrobés d'une résine réticulable par rayonnement UV.

On connaît des dispositifs de réticulation par rayonnement UV d'un objet au moins partiellement constitué d'un matériau réticulable par UV, comprenant un four UV, un tube en matériau perméable au rayonnement UV, disposé dans le four UV et destiné à accueillir au moins une partie de l'objet à réticuler, et des moyens pour générer un écoulement gazeux exempt d'oxygène à travers le tube.

Ces dispositifs permettent en outre une réticulation en continu, c'est à dire que la fibre optique ou du ruban se déplace en continu dans le tube, la vitesse de défilement étant calculée pour que les parties soumises aux UV soient convenablement réticulées entre le moment ou elles entrent dans le tube et le moment où elles en sortent. A cet effet les dispositifs comprennent des moyens pour alimenter en continu le tube avec des parties non réticulées de l'objet à réticuler, et des moyens pour décharger en continu le tube des parties réticulées de l'objet à réticuler.

Les parties de l'objet soumises aux UV voient leur température augmentée. Il se passe alors un phénomène de vaporisation/condensation dans lequel une partie de la matière réticulable se vaporise, puis, en s'élevant, elle se refroidit et se condense formant des suies. Ces suies viennent ensuite se déposer sur la paroi latérale interne du tube affectant sensiblement la perméabilité du tube aux UV.

Un autre inconvénient des dispositifs connus provient du fait que l'écoulement gazeux n'est pas régulier à l'intérieur du tube. cela à pour conséquences de perturber la position de l'objet à réticuler dans le tube ce qui constitue un obstacle à une bonne réticulation.

On connait du document US 5, 171, 609 un dispositif permettant de former un écran d'eau qui absorbe les rayons infrarouges et empèche les dépôts sur l'intérieur du tube.

Un des buts de la présente invention est de fournir un dispositif de réticulation par rayonnement UV comprenant des moyens pour augmenter la durée de vie des tubes en diminuant le dépôt des suies sur la paroi interne du tube.

Un autre but de la présente invention est de fournir un dispositif de réticulation par rayonnement UV comprenant des moyens pour diminuer la formation de suies.

Un autre but de la présente invention de fournir un dispositif de réticulation par rayonnement UV comprenant des moyens pour limiter les perturbations de position de l'objet à réticuler.

A cet effet, l'invention concerne un dispositif de réticulation par rayonnement UV d'un objet au moins partiellement constitué d'un matériau réticulable par UV, ledit dispositif comprenant des sources de rayonnement UV, un tube en matériau perméable au rayonnement UV, entouré par les sources de rayonnement UV et destiné à accueillir au moins une partie de l'objet à réticuler, et des moyens pour générer un écoulement gazeux à travers le tube. Selon l'invention le dispositif comprend en outre des moyens de canalisation pour qu'une partie de l'écoulement gazeux constitue un écran gazeux balayant la paroi latérale intérieure du tube au moins pendant la réticulation.

Les moyens de canalisation comprennent un disque diffuseur, ayant un alésage central traversant et une couronne concentrique distale d'ouvertures périphériques traversantes, et placé concentriquement à l'extrémité amont du tube, perpendiculairement à l'axe de l'écoulement gazeux.

Les ouvertures périphériques traversantes peuvent être des alésages circulaires traversants tangents à la paroi latérale intérieure du tube

Les alésages périphériques traversants peuvent avoir un axe d'alésage oblique par rapport à l'axe d'écoulement, et parallèle au plan tangent à la périphérie du disque en regard de l'alésage périphérique traversant concerné.

Les axes obliques des alésages font un angle d'environ 45° avec l'axe de l'écoulement.

Selon une autre caractéristique de l'invention le disque diffuseur comprend une couronne concentrique proximale d'ouvertures traversantes située à proximité de l'alésage central.

Les ouvertures de cette couronne proximale peuvent être des alésages circulaires traversants d'axe d'alésage parallèle à l'axe d'écoulement, et tangents au périmètre de l'alésage central.

Un premier avantage de la présente invention est l'écran gazeux balayant la surface latérale intérieure du tube. Cela limite le dépôt des suies sur la paroi interne du tube. Avantageusement l'écran gazeux fait un balayage hélicoïdal du fait des axes obliques des alésages du disque diffuseur.

De nombreux avantages de la présente invention résultent de la couronne proximale d'ouvertures traversantes. Cette couronne proximale génère un écoulement secondaire de régulation du de l'écoulement principal passant par l'alésage central. Cela permet de limiter les variations de position de l'objet à réticuler, d'augmenter la vitesse de l'écoulement gazeux à proximité de l'objet à réticuler, donc de mieux refroidir l'objet à réticuler et donc de limiter le phénomène d'évaporation/condensation générateur de suies.

D'autres caractéristiques et avantages de la présente invention résulteront de la description qui va suivre en référence aux dessins annexés dans lesquels :

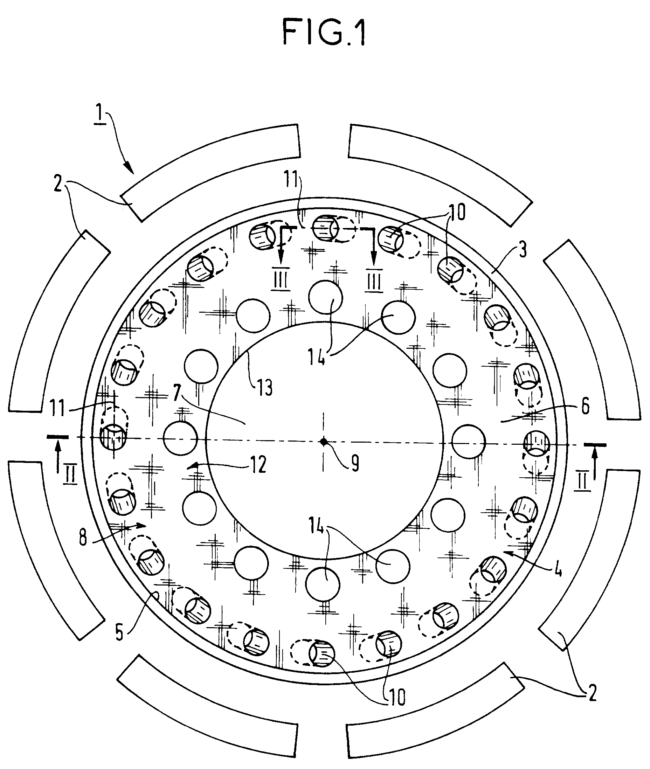

- la figure 1 est une représentation schématique en coupe transversale d'un dispositif selon l'invention.

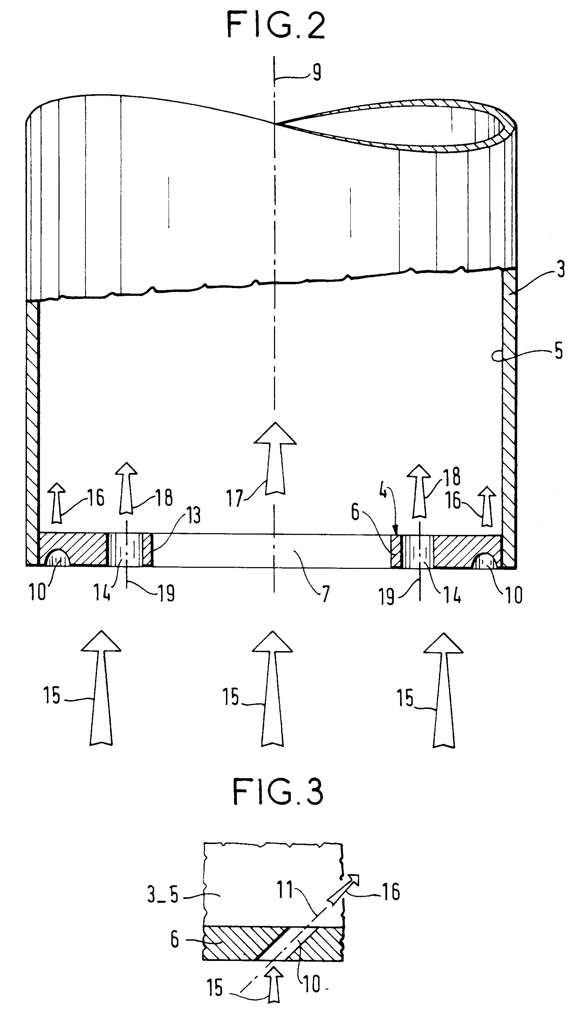

- la figure 2 est une représentation schématique en coupe selon la ligne II-II de la représentation de la figure 1.
- la figure 3 est une représentation schématique en coupe selon la ligne III-III de la représentation de la figure 1.

Le dispositif de réticulation par rayonnement UV d'un objet au moins partiellement constitué d'un matériau réticulable par UV selon l'invention comprend de façon connue des sources 2 de rayonnement UV entourant un tube 3 en matériau perméable au rayonnement UV. Le tube peut par exemple non limitatif être un tube en quartz. Ce tube 3 est destiné à accueillir au moins une partie de l'objet à réticuler. Le dispositif comprend aussi de façon connue des moyens d'alimentation en gaz (non représentés) pour générer un écoulement gazeux 15 à travers le tube 3 selon un axe général d'écoulement 9. Le dispositif comprend aussi des moyens (non représentés) pour alimenter en continu le tube avec des parties non réticulées de l'objet à réticuler, et des moyens pour décharger en continu le tube des parties réticulées de l'objet à réticuler.

Selon l'invention le dispositif comprend en outre des moyens de canalisation 4 pour qu'une partie 16 de l'écoulement gazeux 15 constitue un écran gazeux balayant la paroi latérale intérieure 5 du tube 3.

Dans le mode de réalisation représenté sur les figures, les moyens de canalisation 4 comprennent un disque diffuseur 6, ayant un alésage central traversant 7 et une couronne concentrique distale 8 d'ouvertures périphériques traversantes 10. Le disque diffuseur 6 est placé à l'extrémité amont du tube 3, perpendiculairement à l'axe général 9 de l'écoulement gazeux 15.

Les ouvertures périphériques traversantes 10 peuvent être des alésages circulaires traversants 10 tangentant la paroi latérale intérieure 5 du tube 3.

Ces alésages périphériques traversants 10 peuvent avoir un axe d'alésage oblique 11 par rapport à l'axe d'écoulement 9.

Avantageusement les axes obliques 11 des alésages 10 font un angle d'environ 45° avec l'axe de l'écoulement 9.

Selon une autre caractéristique de l'invention le disque diffuseur 6 comprend une couronne concentrique proximale 12 d'ouvertures traversantes 14 située à proximité de l'alésage central 7.

Les ouvertures 14 de cette couronne proximale 12 peuvent être des alésages circulaires traversants 12 d'axe d'alésage 19 parallèle à l'axe général d'écoulement 9, et tangentant le périmètre 13 de l'alésage central 7.

L'écoulement gazeux 15 se divise donc en un écoulement principal 17 au travers de l'alésage central traversant 7, un écoulement périphérique 16 au travers des ouvertures périphériques traversantes 10 de la couronne distale 8, et un écoulement secondaire 18 au travers des ouvertures traversantes 14 de la couronne concentrique proximale 12.

Écoulement périphérique 16 constitue un écran gazeux balayant la paroi latérale intérieure 5 du tube 3.

Avantageusement dans le cas d'alésages périphériques 10 à axe d'alésage 11 oblique, l'écoulement périphérique 16 forme, à proximité de la paroi un écran gazeux à mouvement hélicoïdal de direction générale selon l'axe général d'écoulement 9.

l'écoulement secondaire 18 entoure l'écoulement principal 17.

Un premier avantage de la présente invention est l'écoulement périphérique 16 balayant la paroi latérale intérieure 5 du tube 3. Cela limite le dépôt des suies sur la paroi latérale intérieure 5 du tube 3. Avantageusement l'écran gazeux fait un balayage hélicoïdal du fait des axes 11 obliques des alésages périphériques 10 du disque diffuseur 6.

De nombreux avantages de la présente invention résultent de la couronne proximale 12 d'ouvertures traversantes 14.

Cette couronne proximale 12 génère l'écoulement secondaire 18 de régulation de écoulement principal 17 passant par l'alésage central 7.

Cela permet de limiter les variations de position de l'objet à réticuler, d'augmenter la vitesse de l'écoulement gazeux 17 à proximité de l'objet à réticuler, donc de mieux refroidir l'objet à réticuler soumis au rayonnement UV, et donc de limiter le phénomène d'évaporation/condensation générateur de suies.

Les objets à réticuler peuvent être par exemples non limitatifs, des fibres optiques enrobées avec une encre de coloration réticulable sous UV ou une pluralité de fibres optiques mises côte à côte et enrobées par une résine réticulable sous UV de manière à former un ruban optique.

## Revendications

1. Dispositif de réticulation par rayonnement UV d'un objet au moins partiellement constitué d'un matériau réticulable par UV, le dit dispositif comprenant des sources (2) de rayonnement UV, un tube (3) en matériau perméable au rayonnement UV, entouré par les sources (2) de rayonnement UV, et destiné à accueillir au moins une partie de l'objet à réticuler, et des moyens d'alimentation en gaz pour générer un écoulement gazeux (15) à travers le tube (3) suivant un axe général d'écoulement (9), caractérisé en ce qu'il comprend en outre des moyens de canalisation (4) pour qu'une partie (16) de l'écoulement gazeux (15) constitue un écran gazeux balayant la paroi latérale intérieure (5) du tube (3).

2. Dispositif selon la revendication 1 caractérisé en ce qu'il comprend des moyens pour alimenter en continu le tube (3) avec des parties non réticulées de l'objet à réticuler, et des moyens pour décharger en continu le tube (3) des parties réticulées de l'objet à réticuler.

3. Dispositif selon la revendication 2 caractérisé en ce que l'objet à réticuler est une fibre optique enrobée avec une encre colorée réticulable sous UV.

4. Dispositif selon la revendication 2 caractérisé en ce que l'objet à réticuler est une pluralité de fibres optiques enrobée avec une résine réticulable sous UV.

5. Dispositif selon l'une quelconque des revendications 1 à 4 caractérisé en ce que les moyens de canalisation (4) comprennent un disque diffuseur (6), ayant un alésage central traversant (7) et une couronne concentrique distale (8) d'ouvertures périphériques traversantes 10, et placé à l'extrémité amont du tube (3) perpendiculairement à l'axe général d'écoulement (9).

6. Dispositif selon la revendication 5 caractérisé en ce que les ouvertures périphériques traversantes (10) sont des alésages circulaires traversants (10) tangentant la paroi latérale intérieure (5) du tube (3).

7. Dispositif selon la revendication 6 caractérisé en ce que les alésages périphériques traversants (10) ont un axe d'alésage oblique (11) par rapport à l'axe général d'écoulement (9).

8. Dispositif selon la revendication 7 caractérisé en ce que les axes obliques (11) des alésages (10) font un angle d'environ 45° avec l'axe général d'écoulement (9).

9. Dispositif selon l'une quelconque des revendications 5 à 8 caractérisé en ce que le disque diffuseur (6) comprend une couronne concentrique proximale (12) d'ouvertures traversantes (14) située à proximité de l'alésage central (7).

10. Dispositif selon la revendication 9 caractérisé en ce que les ouvertures (14) de la couronne proximale (12) sont des alésages circulaires traversants (12) d'axe d'alésage (19) parallèle à l'axe général d'écoulement (9), et tangentant le périmètre (13) de l'alésage central (7).

## Claims

1. Apparatus for curing an object by using UV radiation, the object being made, at least in part, of a material that is cross-linkable under UV radiation, said apparatus including: UV radiation sources (2); a tube (3) made of a material that is permeable to UV radiation, the tube being surrounded by the UV radiation sources (2), and being designed to receive at least a portion of the object to be cured; and gas feed means for generating a gas flow (15) through the tube (3) along a general flow axis (9), said apparatus being characterized in that it further includes channeling means (4) for causing a portion (16) of the gas flow (15) to constitute a gas screen sweeping the inside sidewall (5) of the tube (3).

2. Apparatus according to claim 1, characterized in that it includes means for continuously feeding the tube (3) with non-cured portions of the object to be cured, and means for continuously unloading cured portions of the object to be cured from the tube (3).

3. Apparatus according to claim 2, characterized in that the object to be cured is an optical fiber coated with a colored ink that is cross-linkable under UV radiation.

4. Apparatus according to claim 2, characterized in that the object to be cured is a plurality of optical fibers coated with a resin that is cross-linkable under UV radiation.

5. Apparatus according to any one of claims 1 to 4, characterized in that the channeling means (4) comprise a sparger disk (6) having a through central bore (7), and an outer concentric ring (8) of through peripheral openings (10), the sparger disk being placed at the upstream end of the tube (3) and perpendicular to the general flow axis (9).

6. Apparatus according to claim 5, characterized in that the through peripheral openings (10) are through circular bores (10) extending tangentially to the inside sidewall (5) of the tube (3).

7. Apparatus according to claim 6, characterized in that each of the through peripheral bores (10) has a sloping axis (11) that slopes relative to the general flow axis (9).

8. Apparatus according to claim 7, characterized in that the sloping axis (11) of each the peripheral bores (10) forms an angle of about 45° with the general flow axis (9).

9. Apparatus according to any one of claims 5 to 8, characterized in that the sparger disk (6) includes an inner concentric ring (12) of through openings (14), which ring is situated in the vicinity of the central bore (7).

10. Apparatus according to claim 9, characterized in that the openings (14) in the inner ring (12) are through circular bores (12) having respective axes (19) that are parallel to the general flow axis (9), and that extend tangentially to the perimeter (13) of the central bore (7).

## Patentansprüche

1. Gerät zur Vernetzung eines Wenigstens teilweise aus einem durch UV vernetzbaren Material bestehenden Gegenstandes mittels UV-Strahlung, wobei das Gerät UV-Strahlungsquellen (2), eine Röhre (3) aus einem für UV-Strahlung durchlässigen Material, die von den UV-Strahlungsquellen (2) umgeben und dafür bestimmt ist, wenigstens einen Teil des zu vernetzenden Gegenstandes aufzunehmen, und Mittel zur Zuführung von Gas umfasst, um einen Gasstrom (15) durch die Röhre (3) gemäß einer allgemeinen Strömungsachse (9) zu erzeugen, dadurch gekennzeichnet, dass es außerdem Leitungsmittel (4) umfasst, damit ein Teil (16) des Gasstroms (15) eine gasförmige Abschirmung bildet, die die innere Seitenwand (5) der Röhre (3) spült.

2. Gerät nach Anspruch 1, dadurch gekennzeichnet, dass es Mittel zur kontinuierlichen Versorgung der Röhre (3) mit nicht vernetzten Teilen des zu vernetzenden Gegenstands und Mittel zum kontinuierlichen Austragen der vernetzten Teile des zu vernetzenden Gegenstands aus der Röhre (3) umfasst.

3. Gerät nach Anspruch 2, dadurch gekennzeichnet, dass der zu vernetzende Gegenstand eine optische Faser ist, die mit einer unter UV vernetzbaren, gefärbten Tinte umhüllt ist.

4. Gerät nach Anspruch 2, dadurch gekennzeichnet, dass der zu vernetzende Gegenstand eine Vielzahl von optischen Fasern ist, die mit einem unter UV vernetzbaren Harz umhüllt ist.

5. Gerät nach einem der Ansprüche 1 bis 4, dadurch gekennzeichnet, dass die Leitungsmittel (4) eine Verteilerplatte (6) umfassen, die eine hindurchgehende mittlere Bohrung (7) und einen fernen konzentrischen Kranz (8) von hindurchgehenden Umfangsöffnungen 10 aufweist und am stromaufwärtigen Ende der Röhre (3) senkrecht zur allgemeinen Strömungsachse (9) angeordnet ist.

6. Gerät nach Anspruch 5, dadurch gekennzeichnet, dass die hindurchgehenden Umfangsöffnungen (10) hindurchgehende, kreisförmige Bohrungen (10) sind, die die innere Seitenwand (5) der Röhre (3) berühren.

7. Gerät nach Anspruch 6, dadurch gekennzeichnet, dass die hindurchgehenden Umfangsbohrungen (10) eine in bezug auf die allgemeine Strömungsachse (9) schräge Bohrungsachse (11) haben.

8. Gerät nach Anspruch 7, dadurch gekennzeichnet, dass die schrägen Achsen (11) der Bohrungen (10) mit der allgemeinen Strömungsachse (9) einen Winkel von etwa 45° bilden.

9. Gerät nach einem der Ansprüche 5 bis 8, dadurch gekennzeichnet, dass die Verteilerplatte (6) einen nahen konzentrischen Kranz (12) von hindurchgehenden Öffnungen (14) umfasst, der sich in der Nähe der mittleren Bohrung (7) befindet.

10. Gerät nach Anspruch 9, dadurch gekennzeichnet, dass die Öffnungen (14) des nahen Kranzes (12) hindurchgehende kreisförmige Bohrungen (12) mit einer Bohrungsachse (19) parallel zur allgemeinen Strömungsachse (9) sind und die den Umfang (13) der zentralen Bohrung (7) berühren.
